# EUROPEAN PATENT APPLICATION

(11) **EP 2 193 915 A1**
(43) Date of publication of application: **09.06.2010**
(21) Application number: 08834656.4
(22) Date of filing: 25.09.2008
(51) Int. Cl.: B32B 27/30, B05D 5/00, B05D 7/24, C08J 7/04

(54) **GAS-BARRIER MATERIAL WITH EXCELLENT BLOCKING RESISTANCE AND PROCESS FOR PRODUCING THE SAME**

(30) Priority: 27.09.2007 JP 2007252288; 14.02.2008 JP 2008032598
(71) Applicant: Toyo Seikan Kaisha, Ltd., Tokyo 100-8522 (JP)
(72) Inventor: OBU, Yusuke, Yokohama-shi Kanagawa 240-0062 (JP); KAWAI, Kashiko, Yokohama-shi Kanagawa 240-0062 (JP)
(74) Representative: Manley, Nicholas Michael
(86) International application number: PCT/JP2008/067298
(87) International publication number: WO 2009/041500

(57) **Abstract**

[Abstract] A gas-barrier material having a gas-barrier layer which comprises a polycarboxylic acid polymer, the gas-barrier layer having a chemical bond stemming from an isocyanate group formed in the surface thereof, and the content of nitrogen being at least not less than 1 atom% per the total amount of carbon, oxygen and nitrogen in the surface layer. The gas-barrier material comprising a polycarboxylic acid polymer which is a high hydrogen-bonding polymer exhibits excellent anti-blocking property without dependent upon the degree of crosslinking.

## Description

### Technical Field:

This invention relates to a gas-barrier material having excellent anti-blocking property and to a method of producing the same. More specifically, the invention relates to a gas-barrier material preventing blocking caused by water-absorbing property of a carboxyl group in the gas-barrier material that comprises a polycarboxylic acid polymer and to a method of producing the same.

### Background Art:

A variety of gas-barrier resins have heretofore been used and among them are such known gas-barrier resins as polyvinylidene chloride, polyacrylonitrile, ethylene/vinyl alcohol copolymer and the like. However, use of the polyvinylidene chloride and polyacrylonitrile has been refrained from the environmental point of view while the ethylene/vinyl alcohol copolymer is accompanied by a problem in that the gas-barrier property is much dependent upon the humidity, i.e., the gas-barrier property decreases under highly humid conditions.
A film obtained by vapor-depositing an inorganic material on the surface of a base material has been known for imparting gas-barrier property to the packing materials. However, the above film is very costly and, besides, is accompanied by a problem of poor flexibility and poor adhesion to the base material or to any other resin layers.

In order to solve the above problems, there have been proposed a gas-barrier resin composition obtained by reacting a polycarboxylic acid polymer, a crosslinking agent having 2 to 4 functional groups that react with a carboxyl group, and metal ions having valencies of two or more together, in order to form a crosslinked moiety due to the crosslinking agent and a crosslinked moiety due to metal ions having valencies of two or more in the polycarboxylic acid polymer, the weight ratio of the polycarboxylic acid polymer and the crosslinking agent being 99.9/0.1 to 65/35 (patent document 1), and a gas-barrier film obtained by forming a gas-barrier layer on at least one surface of a thermoplastic resin film, the layer being formed by polyacrylic acid crosslinked with a crosslinking agent that contains an epoxy compound having three or more epoxy groups per a molecule, and the crosslinking agent being contained in an amount of 1 to 100 parts by mass per 100 parts by mass of polyacrylic acid (patent document 2).

Patent document 1: JP-A-2003-171419
Patent document 2: JP-A-2002-240207

### Disclosure of the Invention:

### Problems to be Solved by the Invention:

The gas-barrier materials disclosed in the above patent documents 1 and 2 must be crosslinked by being heated at a temperature as high as not lower than 150°C and for extended periods of time, seriously affecting the plastic base material, arousing a problem from the standpoint of productivity, and without meeting the requirements of flexibility and retort resistance to a sufficient degree. If the gas-barrier material is formed by heating at a low temperature for a short period of time, then the crosslinking is not accomplished to a sufficient degree. Therefore, the material exhibits very poor waterproof property, low barrier property under highly humid conditions, and cannot be used as a gas-barrier material.
Even if the gas-barrier material could be formed having a low degree of crosslinking yet featuring excellent barrier property, flexibility and retort resistance, a new problem arouses in that the gas-barrier material is blocked due to the crosslinking of a low degree. That is, the gas-barrier material comprising a polycarboxylic acid polymer which is a high hydrogen-bonding polymer, absorbs water to a high degree if the degree of crosslinking is low and, therefore, easily induces the blocking.

It is, therefore, an object of the present invention to provide a gas-barrier material comprising a polycarboxylic acid polymer which is a high hydrogen-bonding polymer, exhibiting excellent anti-blocking property without dependent upon the degree of crosslinking.
The invention, further, provides a gas-barrier material having excellent gas-barrier property, retort resistance and flexibility, which can be formed by heating at a low temperature for a short period of time and, further, featuring excellent anti-blocking property.
A further object of the present invention is to provide a method of producing a gas-barrier material, and a packing material by using the gas-barrier material.

### Means for Solving the Problems:

According to the present invention, there is provided a gas-barrier material having a gas-barrier layer which comprises a polycarboxylic acid polymer, the gas-barrier layer having a chemical bond stemming from an isocyanate group formed in the surface thereof, and the content of nitrogen being at least not less than 1 atom% per the total amount of carbon, oxygen and nitrogen in the surface layer.
In the gas-barrier material of the present invention, it is desired that:
1. The gas-barrier layer is formed on an isocyanate compound-containing layer;
2. The gas-barrier layer is forming a crosslinked structure among the polycarboxylic acid polymers;
3. At least two ester bonds or amide ester bonds are formed in the crosslinked portion in the crosslinked structure;
4. At least one of the ester bonds is adjacent to a cycloalkyl group;
5. The polycarboxylic acid polymer is poly(meth)acrylic acid or partly neutralized product thereof; and
6. The gas-barrier layer is forming a metal ionic crosslinking with polyvalent metal ions among the remaining unreacted carboxyl groups.

According to the present invention, further, there is provided a gas-barrier laminated member having the gas-barrier material formed on the surface of a plastic base material or held between the plastic layers.
According to the present invention, there is further provided a method of producing a gas-barrier laminated member by forming an isocyanate compound-containing layer on a plastic base material, applying, onto the isocyanate compound-containing layer, a coating material for forming a gas-barrier layer that contains a polycarboxylic acid polymer, and evaporating the solvent in the coating material so that the isocyanate compound migrates into the surface of the gas-barrier layer to thereby form a chemical bond stemming from an isocyanate group in the surface of the gas-barrier layer.

### Effect of the Invention:

The gas-barrier material of the invention has a chemical bond stemming from an isocyanate group formed in the surface of the gas-barrier layer that comprises a polycarboxylic acid polymer and, therefore, exhibits excellent anti-blocking property irrespective of the degree of crosslinking in the gas-barrier layer.
Further, the gas-barrier material of the invention forms an isocyanate compound-containing layer under the gas-barrier layer making it possible to realize an anti-blocking effect in the surface of the gas-barrier layer without using anti-blocking agent or the like.
Further, the gas-barrier material of the invention easily forms a crosslinked structure upon being heated at a low temperature for a short period of time, making it possible to shorten the time for production and to decrease energy without adversely affecting the plastic base material and, therefore, to form an excellent gas-barrier material maintaining high productivity.
Further, the gas-barrier material of the invention has excellent gas-barrier property and waterproof property, exhibits excellent anti-blocking property and gas-barrier property even after subjected to high temperature and wet heated conditions such as of retort sterilization, and is capable of imparting retort resistance.

### Brief Description of the Drawings:

[Fig. 1] shows XPS narrow scan spectra (C1S, O1S, N1S) of a gas-barrier material of the invention immediately after a gas-barrier layer is formed (A) and after a retort sterilization treatment (B).
[Fig. 2] shows an XPS wide scan spectrum of the gas-barrier material of the invention after the gas-barrier layer is dip-treated.
[Fig. 3] is a view illustrating a sectional structure of a laminated member 1 prepared in Example 1.
[Fig. 4] is a view illustrating a sectional structure of a laminated member 9 prepared in Example 6.
[Fig. 5] is a view illustrating a sectional structure of a laminated member 10 prepared in Example 8.

### Best Mode for Carrying Out the Invention:

According to the present invention, an important feature resides in that a gas-barrier material has a gas-barrier layer which comprises a polycarboxylic acid polymer, the gas-barrier layer having a chemical bond stemming from an isocyanate group formed in the surface thereof, and the content of nitrogen being at least not less than 1 atom% per the total amount of carbon, oxygen and nitrogen in the surface layer.
The present inventors have already proposed a gas-barrier material which comprises a polycarboxylic acid polymer and a predetermined crosslinking agent, and can be formed by heating at a low temperature for a short period of time (WO2007/037044). As will be described later, the gas-barrier material having excellent retort resistance can be formed by crosslinking the polycarboxylic acid polymer with a particular crosslinking agent upon being heated at a low temperature for a short period of time without adversely affecting the base material. However, if the amount of the crosslinking agent is decreased in order to decrease the cost, the degree of crosslinking decreases permitting the blocking to easily take place upon absorbing moisture.

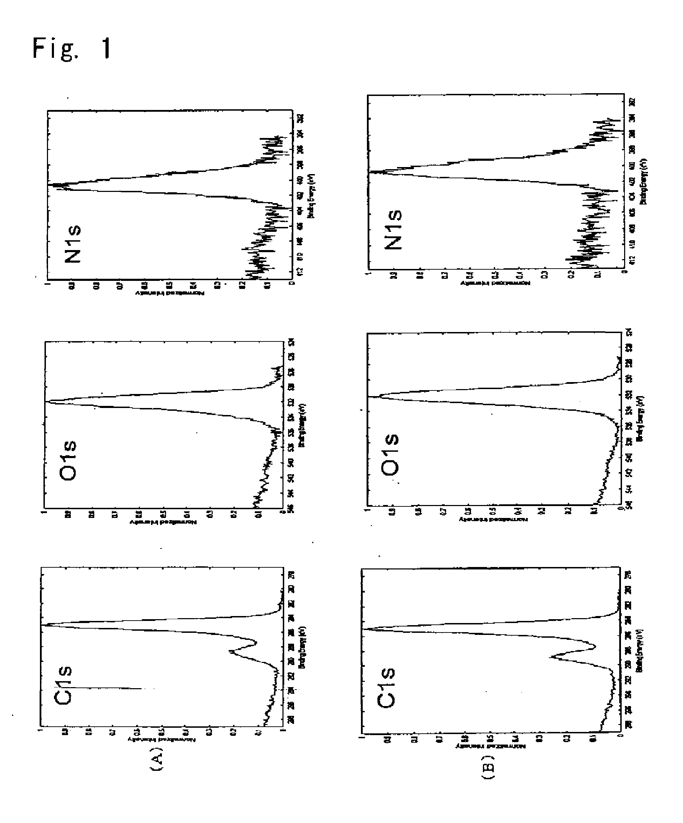

According to the present invention, it was discovered that a gas-barrier material comprising a polycarboxylic acid polymer and a crosslinking agent and having excellent retort resistance, exhibits improved anti-blocking property if a chemical bond stemming from an isocyanate group is formed in the surface of the gas-barrier layer and if the content of nitrogen is at least not less than 1 atom% per the total amount of carbon, oxygen and nitrogen in the surface layer.
That is, in the present invention, the anti-blocking property is improved as a result of forming a chemical bond stemming from the isocyanate group in the gas-barrier layer and forming a surface layer (hereinafter often referred to as "anti-blocking layer") that contains nitrogen in a particular amount and has anti-blocking property.
Even when subjected to the retort sterilization treatment, the gas-barrier material of the present invention exhibits excellent anti-blocking property without losing retort resistance or gas-barrier property under highly humid conditions since the anti-blocking layer is present on the surface of the gas-barrier layer maintaining stability.
That is, as will be obvious from the XPS narrow scan spectra of immediately after a gas-barrier layer is formed (A) and after a retort sterilization treatment (B) shown in Fig. 1, the gas-barrier material of the invention has the nitrogen content that does not almost vary and has a peak shape that does not almost change before and after the retort sterilization treatment, from which it will be learned that the anti-blocking layer is not affected by the retort sterilization treatment and maintains excellent retort resistance.

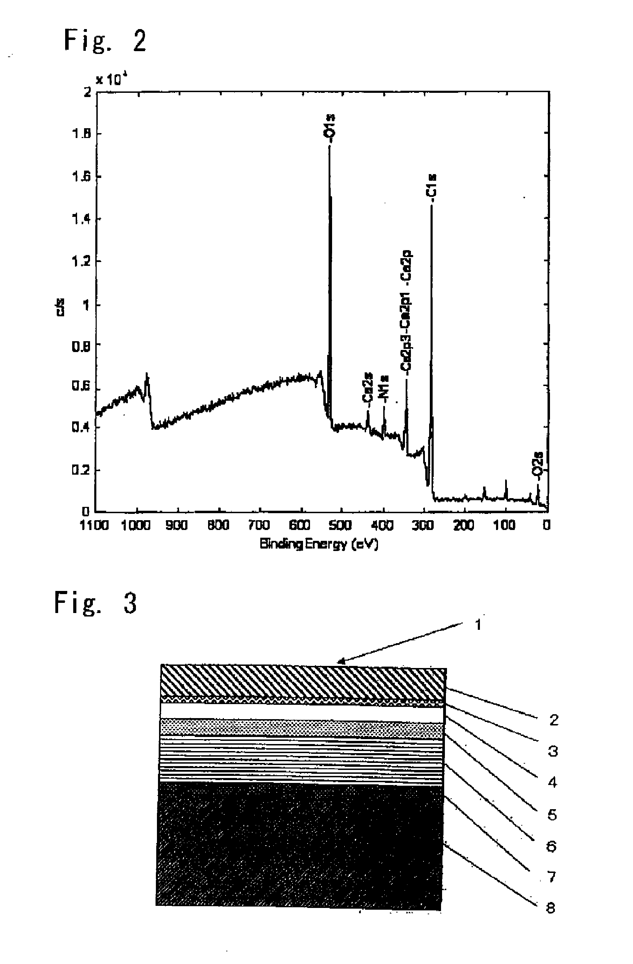

In the gas-barrier material of the present invention, further, the anti-blocking layer may be formed as a partly discrete layer on the surface of the gas-barrier layer. This is obvious from the fact that a sufficient degree of anti-blocking property is obtained by the metal ionic crosslinking treatment that will be described later even when Ca present in the gas-barrier layer due to the formation of metal ionic crosslinking is detected in the surface layer, too, i.e., even when the anti-blocking layer is a discrete layer being mixed with the gas-barrier layer as shown in Fig. 2.
Here, however, it is important that the anti-blocking layer is so formed that the content of nitrogen is at least not less than 1 atom% and, particularly, in a range of 1.2 to 16.7 atom% per the total amount of carbon, oxygen and nitrogen. If the content of nitrogen is less than 1 atom% per the total amount of carbon, oxygen and nitrogen, the anti-blocking layer is not formed in the surface of the gas-barrier layer to such a degree as to effectively prevent the blocking and, therefore, a desired anti-blocking effect is not obtained.
The content of carbon, oxygen and nitrogen atoms in the surface of the gas-barrier layer can be measured by analyzing the surface by an XPS (X-ray photoelectronic spectroscopy). Detection of calcium is also confirmed by analyzing the surface by the XPS.

The gas-barrier material of the invention can also be formed by applying an isocyanate compound-containing layer onto the surface of the gas-barrier layer to thereby form the anti-blocking layer on the surface of the gas-barrier layer. Here, the anti-blocking effect can be fully exhibited if a layer having a chemical bond stemming from the isocyanate group is formed in the surface maintaining a thickness of about 10 nm.
In particular, a coating material for forming a gas-barrier layer that contains a high hydrogen-bonding polymer is applied onto the isocyanate compound-containing layer that has been formed in advance, and the solvent in the coating material is evaporated so that the isocyanate compound migrates into the surface of the gas-barrier layer to thereby form, in the gas-barrier layer, a surface layer forming a chemical bond stemming from an isocyanate group. This is desirable from the standpoint of further forming an anti-blocking layer with the isocyanate compound-containing layer as an anchor layer.
Namely, it is considered that (1) upon applying the coating material for forming a gas-barrier layer onto the isocyanate compound-containing layer, the isocyanate compound migrates into the applied film that becomes the gas-barrier layer due to the affinity of a solvent in the coating material, and (2) upon heating for forming the gas-barrier layer, the solvent in the applied film evaporates causing the migrated isocyanate component to bleed out to the surface of the gas-barrier layer (transfer into the surface layer), and, further, (3) the isocyanate component reacts with alcohol or water in the coating material for forming the gas-barrier layer, or with a polycarboxylic acid polymer, or the isocyanate derivatives react with one another as expressed by the following chemical formula making it possible to form, in the surface of the gas-barrier layer, an anti-blocking layer having a chemical bond stemming from an isocyanate group that acts mutually to the gas-barrier layer.

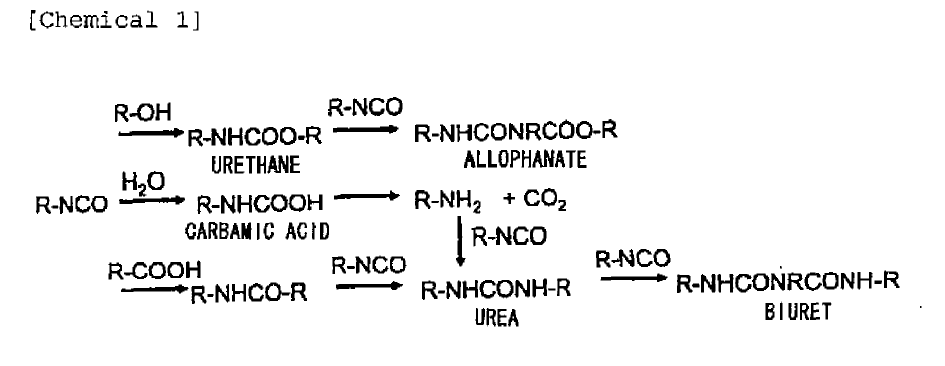

In the present invention, the basic structure for forming the gas-barrier layer upon heating at a low temperature for a short period of time is due to the formation of the anti-blocking layer in the surface of the gas-barrier layer. To further improve the waterproof property according to the invention, moreover, a crosslinked structure may be formed among the polycarboxylic acid polymers. The crosslinked structure in the polycarboxylic acid polymer formed by the gas-barrier layer upon heating at a low temperature for a short period of time, is due to the reaction of the polycarboxylic acid polymer and a predetermined crosslinking agent that will be described later.
That is, described below is a gas-barrier material comprising a polycarboxylic acid polymer (A) and at least a bifunctional alicyclic epoxy compound (B) as a crosslinking agent as expressed by the following formula (1). A carboxyl group of the polycarboxylic acid polymer (A) reacts with an oxyrane ring of the alicyclic epoxy compound (B) to form a crosslinked structure that forms two ester structures stemming from alicyclic epoxy groups at both terminals of the alicyclic epoxy compound (B) crosslinked with the polycarboxylic acid polymer (A), imparting excellent gas-barrier property.

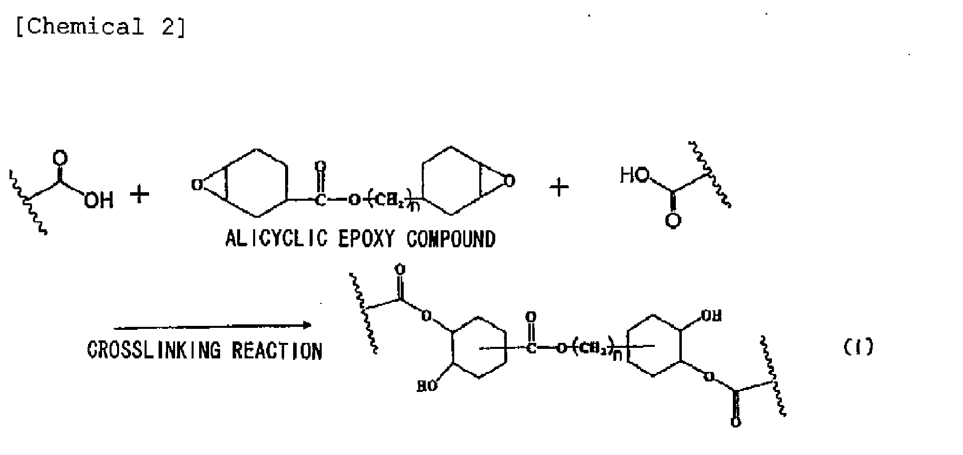

Further, described below is a gas-barrier material comprising a polycarboxylic acid polymer (A) and a compound (C) in which an ether bond is formed on carbon that forms a duble bond to nitrogen as a crosslinking agent and which has two cyclic structures (c) including oxygen in the ether bond. Namely, carboxyl groups in the polycarboxylic acid polymer (A) reacts with the cyclic structures (c) of the compound (C) to form amide esters to thereby form a crosslinked film forming two amide ester bonds at the crosslinked portions, imparting excellent gas-barrier property.

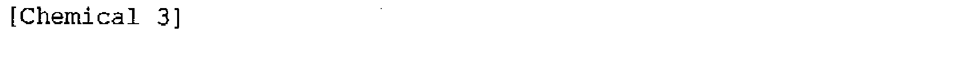

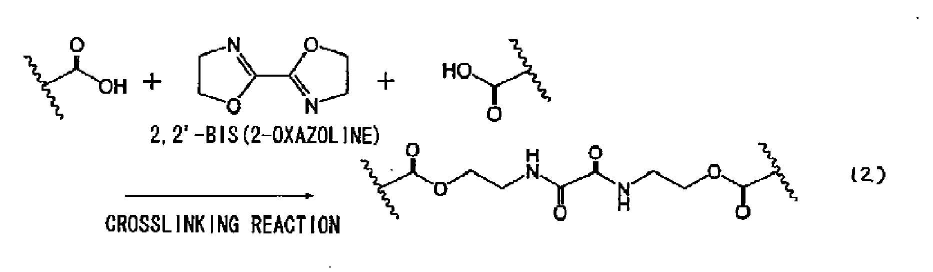

It is considered that the above gas-barrier material exhibits excellent gas-barrier property on account of the reasons described below.
i) Since the polymer which is a chief component is a polycarboxylic acid polymer, the carboxyl group on a side chain exhibits a high hydrogen-bonding property producing a strong cohesive force and, therefore, a basic structure is formed having excellent gas-barrier property.
ii) Due to the reaction of the carboxyl group which is a polymer side chain with the crosslinking component, an ester bond/amide ester bond is formed, which is a structure effective in exhibiting gas-barrier property.
iii) The structure at the crosslinked point little expands in a three-dimensional manner, forming a densely crosslinked structure that exhibits excellent gas-barrier property.
iv) By using the polycarboxylic acid polymer as the main component, the unreacted carboxyl group that was not used for the crosslinking is metal ionically crosslinked to further improve the gas-barrier property under highly humid conditions, imparting excellent gas-barrier property that is not lost even under highly humid conditions.

With the combination of the polycarboxylic acid polymer and the crosslinking agent expressed by the above formulas (1) and (2), it is allowed to form a gas-barrier layer having a crosslinked structure in the polycarboxylic acid polymer upon heating at a low temperature for a short period of time, little affecting the plastic base material that forms the gas-barrier material and offering an advantage of favorable productivity.

### (Polycarboxylic Acid Polymer (A))

As the polycarboxylic acid polymer used for the gas-barrier material of the invention, there can be exemplified homopolymers or copolymers of monomers having a carboxyl group, such as polyacrylic acid, polymethacrylic acid, polymaleic acid, polyitaconic acid and acrylic acid/methacrylic acid copolymer, as well as partly neutralized products thereof. Preferably, there can be used polyacrylic acid and polymethacrylic acid.
The partly neutralized product of the polycarboxylic acid polymer can be partly neutralized with a metal hydroxide salt, such as sodium hydroxide or potassium hydroxide, or with ammonia.
Though there is no particular limitation, it is desired that the degree of neutralizing the partly neutralized product is not higher than 30% in terms of a molar ratio to the carboxyl groups. If the above range is exceeded, hydrogen bonds less to the carboxyl groups and the gas-barrier property decreases.
Though there is no particular limitation, it is desired that the polycarboxylic acid polymer has a weight average molecular weight in a range of 2,000 to 15,000,000 and, particularly, 10,000 to 1,000,000.

### (Crosslinking Agent)

In the gas-barrier material of the present invention, it is desired that a crosslinked structure is formed among the polycarboxylic acid polymers, and there is no particular limitation on the crosslinking agent if it has at least two functional groups capable of reacting with the carboxyl groups. As the functional group capable of reacting with the carboxyl group, there can be exemplified hydroxyl group, amino group, carbodiimide group and the like groups.
To impart excellent gas-barrier property and retort resistance, further, it is desired that the crosslinked portion has at least two ester bonds or amide ester bonds formed therein.
It is desired that the crosslinking agent for forming the crosslinked structure is an alicyclic epoxy compound (B) or a compound (C) having an ether bond formed on a carbon atom that forms a double bond relative to a nitrogen atom and having two cyclic structures (c) that include oxygen in the ether bond. By using the above crosslinking agent, it is made possible to impart excellent gas-barrier property and retort resistance, and to form the gas-barrier material at a low temperature in a short period of time, the obtained gas-barrier material exhibiting excellent flexibility.

### [Alicyclic Epoxy Compound (B)]

The alicyclic epoxy compound (B) has an alicyclic group in the molecules thereof and contains an epoxy resin component in which a carbon atom adjacent to the alicyclic group is forming an oxylane ring. For example, epoxy compounds having at least one epoxycycloalkyl group such as epoxycyclohexyl group or epoxycyclopentyl group in the molecules thereof can be used alone or in combination.
As the alicyclic epoxy compound (B), there can be exemplified an alicyclic epoxy compound having two epoxycyclohexyl groups in a molecule thereof, that will be described later, as well as vinylcyclohexene monoepoxide, vinylcyclohexene diepoxide, bis(2,3-epoxycyclopentyl)ether and the like.

It is desired that the alicyclic epoxy compound (B) used in the invention is a bifunctional alicyclic epoxy compound having two epoxy groups in a molecule thereof.
That is, when the bifunctional alicyclic epoxy compound is used, the crosslinked structure expands less in a three-dimensional manner than when a trifunctional or a more highly functional alicyclic epoxy compound is used, and a densely crosslinked structure is formed featuring excellent gas-barrier property. Further, since the formed film is not so hard or brittle as that of when a polyfunctional alicyclic epoxy compound is used, excellent flexibility is maintained after the retort sterilization and, therefore, a satisfactory retort resistance is obtained.
As the bifunctional alicyclic epoxy compound, an alicyclic epoxy compound can be favorably used having an alicyclic epoxy group or, more desirably, having, at least, one epoxycycloalkyl group, particularly, an epoxycyclohexyl group, which has an alicyclic group and in which a carbon atom adjacent to the alicyclic group is forming an oxylane ring, and, more desirably, having two epoxycyclohexyl groups in a molecule thereof. This makes it possible to maintain an excellent flexibility after the retort sterilization.

Though not limited thereto only, examples of the alicyclic epoxy compound (B) having two epoxycyclohexyl groups in a molecule thereof, that can be particularly favorably used in the invention, include an alicyclic epoxy compound represented by the following formula (3),

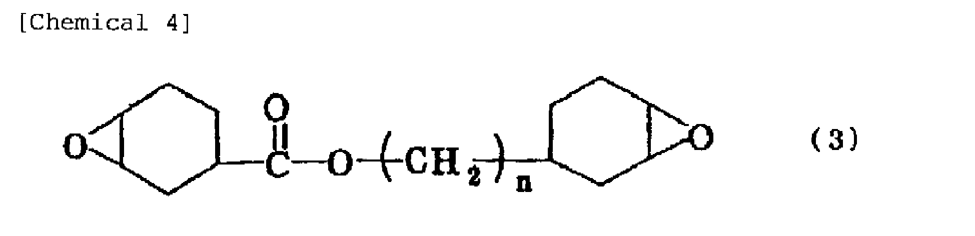

wherein n is an integer of 1 to 10, as well as (3,4-epoxy-6-methylcyclohexyl)methy-3,4-epoxy-6-methylcyclohexane carboxylate, (3,4-epoxy-6-methylcyclohexyl)methyl-3,4-epoxycyclohexane carboxylate, bis(3,4-epoxycyclohexylmethyl)adipate, bis(3,4-epoxycyclohexyl)adipate, bis(3,4-epoxy-6-methylcyclohexylmethyl)adipate, 3,4-epoxy-6-methylcyclohexane carboxylate-3,4-epoxy-6-methylcyclohexane carboxylate, and 3,4-epoxycyclohexylmethyl (3,4-epoxy)cyclohexane carboxylate.

From the standpoint of mechanical properties and color in the present invention, it is desired that the crosslinked portions at both ends of the alicyclic epoxy compound (B), that are formed by the high hydrogen-bonding polymer and the alicyclic epoxy compound (B), are formed by an aliphatic chain. Of the alicyclic epoxy compounds (B) having two epoxycyclohexyl groups in a molecule, therefore, it is desired to use the one that has no aromatic ring and, it is, particularly, desired to use the 3,4-epoxycyclohexylmethyl(3,4-epoxy)cyclohexane carboxylate.
As the epoxycyclohexyl group-containing compounds placed in the market, there can be exemplified Cylacure UVR-6100, Cylacure UVR-6105, Cylacure UVR-6110, Cylacure UVR-6128, Cylacure UVR-6200, Cylacure UVR-6216 (which are manufactured by Dow Chemical Co.), Celloxide 2021, Celloxide 2021P, Celloxide 2081, Celloxide 2083, Cellaxide2085, Epolead GT-300, Epolead GT-301, Epolead GT-302, Epolead GT-400, Epolead 401, and Epolead 403 (which are manufactured by Daicel Chemical Industries Co.), and KRM-2100, KRM-2110 and KRM-2199 (which are manufactured by Asahi Denka Kogyo Co.).

[Compound (C) in which an ether bond is formed by a carbon atom that forms a double bond to a nitrogen atom, and which has two cyclic structures (c) containing oxygen in the ether bond]
A compound in which an ether bond is formed by a carbon atom that forms a double bond to a nitrogen atom, and which has two cyclic structures (c) containing oxygen in the ether bond, i.e., has two cyclic structures with an oxoimino group having a -N=C-O- group or a =C-O- moiety in the ring thereof. Though not limited thereto only, the above ring structures (c) are as exemplified below.

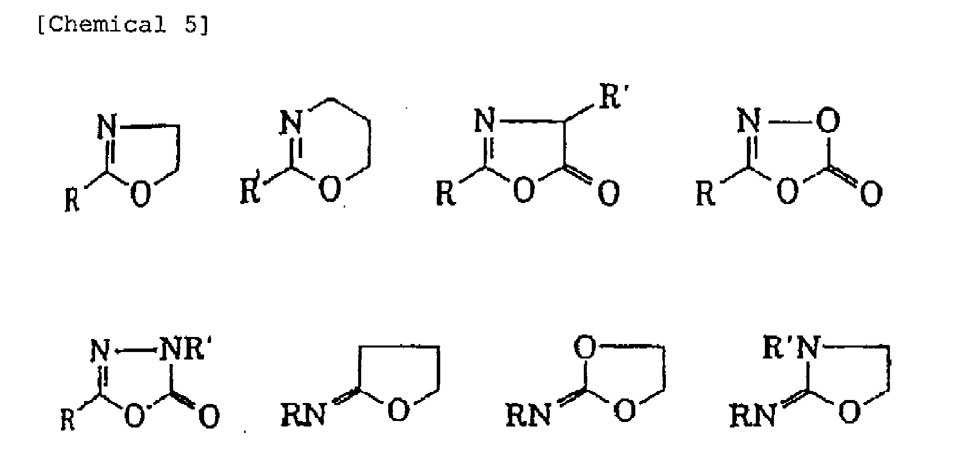

With the ring structure without containing oxygen in the ether bond as expressed by the following formula (4), 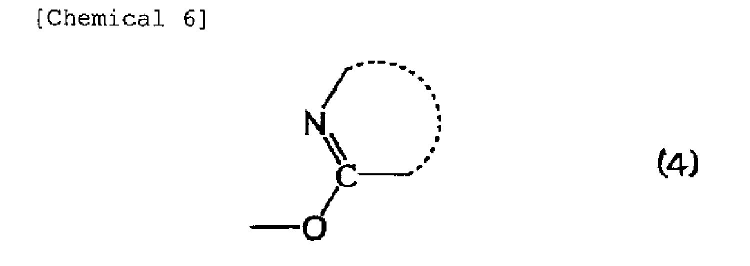 on the other, there takes place no crosslinking reaction for forming the amide ester bonds with the polycarboxylic acid polymer. No crosslinking occurs if the number of the ring structure is only one. If the number of the ring structures is three or more, the structure at the crosslinked point expands three dimensionally, which is not desirable for forming a densely crosslinked structure having excellent gas-barrier property. Because of these reasons, it is important that nitrogen and carbon are forming a double bond, carbon is forming an ether bond, the ether bond is formed by carbon that forms the double bond to nitrogen, these conditions are not only holding individually but also the ether bond is formed by carbon that forms the double bond to nitrogen and, further, two ring structures (c) are possessed containing oxygen in the ether bond.

The compound (C) used for the gas-barrier material of the present invention contains two ring structures (c) which may be of the same structure or may be of different structures. Here, however, it is desired that at least one of them is an oxazoline group or a derivative thereof.

Though not limited thereto only, examples of the compound (C) containing two such ring structures (c) include bisoxazolines such as 2,2'-bis(2-oxazoline), 2,2'-bis(4-methyl-2-oxazoline), 2,2'-bis(5-methyl-2-oxazoline), 2,2'-bis(5,5'-dimethyl-2-oxazoline), 2,2'-bis(4,4,4',4'-tetramethyl-2-oxazoline), 2,2'-p-phenylenebis(2-oxazoline), 2,2'-m-phenylenebis(2-oxazoline), 2,2'-o-phenylenebis(2-oxazoline), 2,2'-p-phenylenebis(4-methyl-2-oxazoline), 2,2,'-p-phenylenebis(4,4-dimethyl-2-oxazoline), 2,2'-m-phenylenebis(4-methyl-2-oxazoline), 2,2'-m-phenylenebis(4,4'-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-decamethylenebis(2-oxazoline), 2,2'-ethylenebis(4-methyl-2-oxazoline), 2,2'-tetramethylenebis(4,4-dimethyl-2-oxazoline), 2,2'-3,3'-diphenoxyethanebis(2-oxazoline), 2,2'-cyclohexylenebis(2-oxazoline) and 2,2'-diphenylenebis(2-oxazoline); and bisoxazines such as 2,2'-methylenebis(5,6-dihydro-4H-1,3-oxazine), 2,2'-ethylenebis(5,6-dihydro-4H-1,3-oxazine), 2,2'-propylenebis(5,6-dihydro-4H-1,3-oxazine), 2,2'-butylenebis(5,6-dihydro-4H-1,3-oxazine), 2,2'-hexamethylenebis(5,6-dihydro-4H-1,3-oxazine), 2,2'-p-phenylenebis(5,6-dihydro-4H-1,3-oxazine), 2,2'-m-phenylenebis(5,6-dihydro-4H-1,3-oxazine), 2,2'-naphthylenebis(5,6-dihydro-4H-1,3-oxazine), and 2,2'-p·p'-diphenylenebis(5,6-dihydro-4H-1,3-oxazine).

It is desired that the compound (C) has crosslinked portions formed by aliphatic chains from the standpoint of mechanical properties and color. Of the compounds (C), therefore, it is desired to use the one that has no aromatic ring and, particularly, to use 2,2'-bis(2-oxazoline).

### (Composition for Forming Gas-Barrier Layer)

It is desired that the composition for forming the gas-barrier layer of the invention contains the alicyclic epoxy compound (B) in an amount of 0.1 to 20 parts by weight and, particularly, 0.2 to 10 parts by weight, or contains the compound (C) in an amount of 2 to 60 parts by weight and, particularly, 4 to 40 parts by weight per 100 parts by weight of the above-mentioned polycarboxylic acid polymer (A).
As a method of preparation, a solution of the polycarboxylic acid polymer (A) is prepared by using a solvent other than water in which the polycarboxylic acid polymer can be dissolved, preferably, by using an alcohol such as methanol, ethanol or isopropanol, or a mixed solvent containing alcohol, and by also adding the alicyclic epoxy compound (B) or the compound (C) directly to the above solvent composition if soluble therein. Or, the alicyclic epoxy compound or the compound (C) may be added to the solution of the polycarboxylic acid polymer in which they can be dissolved so as to be separately dissolved as a solvent composition capable of holding the state of solution and is, thereafter, added to the solution of the polycarboxylic acid polymer. Though dependent upon the kind of the alicyclic epoxy compound (B) or the compound (C), the alicyclic epoxy compound (B) or the compound (C) can be dissolved in an alcohol such as methanol, ethanol or isopropanol, in a ketone such as 2-butanone, in an aromatic solvent such as toluene or in a mixed solvent thereof, and can, thereafter, be added to an alcohol solvent of the polycarboxylic acid polymer.
If the state of the solution can be maintained, it is allowed to add water in order to adjust the coating performance. In the case of the compound (C), however, the presence of water causes the compound (C) to lose activity, and the crosslinking reaction is impaired. To effectively conduct the crosslinking reaction, therefore, it is desired to also use a dehydrating agent that will be described later.
In either preparation method, it is desired that the alcohol is mixed with 2-butanone or acetone in the final solvent composition. If alcohol only is used, the chances of reaction with alcohol increases before the isocyanate compound migrates to the surface of the gas-barrier layer at the time of forming the gas-barrier layer on the isocyanate compound-containing layer; i.e., migration to the surface layer is impaired and, as a result, the isocyanate compound is needed in large amounts for forming the anti-blocking layer pushing up the cost.

In the composition for forming the gas-barrier layer of the invention, further, a basic catalyst may be added to promote the reaction of the carboxyl group of the polycarboxylic acid polymer (A) with the epoxy group of the alicyclic epoxy compound (B), or an acid catalyst may be added to promote the reaction of the carboxyl group of the polycarboxylic acid polymer (A) with the ring structures (c) of the compound (C).
As the basic catalyst, there can be exemplified hydroxides of alkali metals or alkaline earth metals, such as sodium hydroxide, potassium hydroxide, lithium hydroxide, calcium hydroxide and barium hydroxide; ammonia; primary monoamines such as ethylamine, propylamine, butylamine, benzylamine, monoethanolamine, neopentanolamine, 2-aminopropanol and 3-aminopropanol; secondary monoamines such as diethylaminodiethanolamine, di-n- or di-iso-propanolamine, N-methylethanolamine and N-ethylethanolamine; tertiary monoamines such as dimethylethanolamine, trimethylamine, triethylamine, triisopropylamine, methyldiethanolamine and dimethylaminoethanol; and polyaminetriethylamines such as diethylenetriamine, hydroxyethylaminoethylamine, ethylaminoethylamine and methylaminopropylamine.
As the acid catalyst, there can be exemplified monovalent acids such as acetic acid, propionic acid, ascorbic acid, benzoic acid, hydrochloric acid, paratoluenesulfonic acid and alkylbenzenesulfonic acid; as well as divalent or more highly valent acids such as sulfuric acid, sulfurous acid, phosphoric acid, phosphorous acid, hypophosphorous acid, polyphosphoric acid, pyrophosphoric acid, maleic acid, itaconic acid, fumaric acid and polycarboxylic acid.

Further, a dehydrating agent may be added to the composition for forming the gas-barrier layer of the present invention to remove the water component adsorbed by the polycarboxylic acid polymer and to remove the water component present in the solvent used for dissolving, so that water present in the field of reaction will not impair the reaction of the polycarboxylic acid polymer with the crosslinking agent. As known dehydrating agent can be used such as those described below though not limited thereto only.
(i) Powdery and porous metal oxides or carbides; such as synthetic silica, active alumina, zeolite, active carbon, etc.
(ii) Calcium compounds having such compositions as CaSO₄, CaSO₄ · 1/2H₂O and CaO; such as calcined gypsum, soluble gypsum, calcined lime, etc.
(iii) Metal alkoxides; such as aluminum isopropylate, aluminum sec-butylate, tetraisopropyl titanate, tetra n-butyl titanate, zirconium 2-propylate, zirconium n-butylate, ethyl silicate, vinyl trimethoxysilane, etc.
(iv) Monofunctional isocyanates; such as Additive TI (trade name, manufactured by Sumika-Bayer Urethane Co.).
(v) Organoalkoxy compounds; such as organoalkoxy compound represented by the following formula (5),

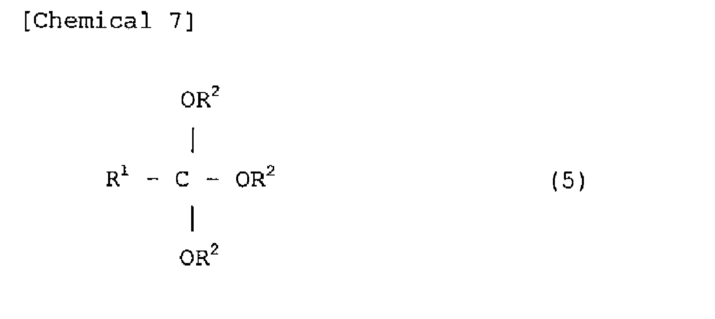

wherein R¹ is a hydrogen atom or -CH₃, and R²s are -CH₃ or -C₂H₅ and may be the same or different.
The dehydrating agents may be used in a single kind or in a combination of two or more kinds.
As the organoalkoxy compound represented by the above formula (5), methyl orthoformate and/or methyl orthoacetate can be preferably used since they are particularly volatile at the time of drying by heating.
In order to remove the water content adsorbed by the polycarboxylic acid polymer, further, the polycarboxylic acid polymer may be subjected to the dehydration treatment such as heating and reduction of pressure prior to preparing a composition for forming the gas-barrier layer. The dehydration treatment can be sufficed by a heat-treatment conducted in an electric oven at a temperature of 140 to 180°C for about 5 to about 20 minutes. Or, any other heating means may be employed, or a treatment of a combination of heating and reduction of pressure may be employed.

The composition for forming the gas-barrier layer of the invention may further contain inorganic dispersed materials in addition to the above components. The inorganic dispersed materials work to block the water content from the exterior, protects the gas-barrier material, and further improves the gas-barrier property and water resistance.
The inorganic dispersed materials may assume any form such as spherical, needle or layer form, but exhibits wettability to the high hydrogen-bonding polymer and to the crosslinking agent, and disperse well in the composition for forming the gas-barrier layer. In particular, a silicate compound having a lamellar crystal structure, such as water-swelling mica or clay can be preferably used from the standpoint of blocking the water component. It is desired that the inorganic dispersed materials have aspect ratios of not less than 30 but not more than 5,000 from the standpoint of being dispersed like layers to block the water content.
It is desired that the inorganic dispersed materials are contained in an amount of 2 to 100 parts by weight per a total of 100 parts by weight of the polycarboxylic acid polymer and the crosslinking agent.

### (Layer Containing Isocyanate Compound)

In the gas-barrier material of the present invention, it is desired that an isocyanate compound-containing layer is formed under the gas-barrier layer making it possible to form an anti-blocking layer on the surface of the gas-barrier layer simultaneously with the formation of the gas-barrier layer.
As the isocyanate compound-containing layer, it is desired to use a layer comprising an urethane polymer containing the isocyanate compound since it improves close adhesion between the gas-barrier layer and the plastic substrate, and improves the mechanical strength or the flexibility of the laminated member.
The urethane polymer may be constituted by a chief agent and a curing agent, may be a precursor in a state where the curing reaction has not been completed or may assume a state where the curing agent is present in an excess amount irrespective of if the curing reaction has been completed, and is desirably constituted chiefly by a polyol component such as polyester polyol or polyether polyol and a polyisocyanate component such that the number of the isocyanate groups in the polyisocyanate component is in excess of the number of the hydroxyl groups in the polyol component.

A polyester polyol is desired as the polyol component used for forming the urethane polymer. As the polyester polyol, there can be exemplified a polyester polyol obtained by reacting a polyhydric carboxylic acid, a dialkyl ester thereof or a mixture thereof with glycols or a mixture thereof.
As the polyhydric carboxylic acid, there can be exemplified aromatic polyhydric carboxylic acids such as isophthalic acid, terephthalic acid and naphthalene dicarboxylic acid; and aliphatic polyhydric carboxylic acids such as adipic acid, azelaic acid, sebacic acid and cyclohexanedicarboxylic acid.
As the glycol, there can be exemplified ethylene glycol, propyene glycol, diethylene glycol, butylene glycol, neopentyl glycol and 1,6-hexane diol.
The polyester polyol has a glass transition temperature of, preferably, -50°C to 100°C and, more preferably, -20°C to 80°C. The polyester polyol has a number average molecular weight of, preferably, 1,000 to 100,000 and, more preferably, 3,000 to 80,000.

As the polyisocyanate used for forming the urethane polymer, there can be exemplified aromatic polyisocyanate such as 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, xylylene diisocyanate and tetramethylxylylene diisocyanate; aliphatic polyisocyanates such as tetramethylene diisocyanate, 1,6-hexamethylene diisocyanate, dodecamethylene diisocyanate, trimethylhexamethylene diisocyanate, 1,3-cyclohexylene diisocyanate, 4-cyclohexylene diisocyanate, hydrogenated xylylene diisocyanate, lysine diisocyanate, isophorone diisocyanate, 4,4'-dicyclohexylmethane diisocyanate and 3,3'-dimethyl-4,4'-dicyclohexylmethane diisocyanate; polyfunctional polyisocyanate compounds derived from the polyisocyanate monomers, such as isocyanurate, biuret and allophanate; and polyfunctional polyisocyanate compounds containing terminal isocyanate groups obtained by the reaction with a trifunctional or more highly functional polyol compound such as trimethylolpropane or glycerin.
Among them, the 1,6-hexamethylene diisocyanate, tetramethylene diisocyanate and derivatives thereof are preferred from the standpoint of bleed-out (surface migration).
The layer containing the isocyanate compound can further be formed by adding the above compound to the urethane polymer that has been formed already, which is not to form the urethane polymer, or by adding the compound to a polymer other than the urethane, such as polyester, polyamide or epoxy resin.

Though not limited thereto only, it is desired that the isocyanate compound-containing layer is formed by using a coating composition which contains the polyisocyanate in an amount of 30 to 120 parts by weight and, particularly, 40 to 90 parts by weight per 100 parts by weight of the polyester polyol. If the amount of the isocyanate is smaller than the above range, the isocyanate component cannot sufficiently migrate into the gas-barrier layer when the gas-barrier layer is being formed, and the anti-blocking property is not obtained as expected.
It is, further, desired that the coating composition is heated and cured under the conditions of a temperature of 60 to 160°C and, particularly, 70 to 140°C for 0.5 to 5 minutes and, particularly, for 1 second to 3 minutes though the conditions may vary depending upon the kinds and blending ratios of the polyester polyol and polyisocyanate that are used, solid components thereof, solvent composition and the amount of applying the coating composition. If the heating temperature and the heating time are greater than the above ranges, the isocyanate compound-containing layer is so cured that a decreased amount of unreacted isocyanate component migrates into the surface of the gas-barrier layer through the heating at the time of forming the gas-barrier layer, and the anti-blocking property is not obtained as expected.
The coating composition can be prepared by dissolving the polyester polyol and polyisocyanate components in a solvent such as toluene, MEK (methyl ethyl ketone), cyclohexanone, sorbesso, isophorone, xylene, ethyl acetate or butyl acetate or in a mixed solution thereof, or by mixing the solutions of the components together. In addition to the above components, it is also allowable to use known cure-promoting catalyst, filler, softening agent, anti-aging agent, stabilizer, adhesion promotor, leveling agent, defoaming agent, plasticizer, inorganic filler, viscosity-imparting resin, fibers, coloring agent such as a pigment, a usable time extender and the like.

The isocyanate compound-containing layer has a thickness of, desirably, 0.01 to 10 µm, more desirably, 0.05 to 5 µm and, further desirably, 0.1 to 3 µm. With the thickness lying in the above range, the isocyanate compound layer exhibits anchoring effect, and helps improve the adhesion of the gas-barrier layer to the base material. With the adhesion among the layers being enhanced due to the anchoring effect of the isocyanate compound layer, the container exhibits further improved mechanical strength and flexibility of the laminated member suppressing an increase in the amount of oxygen permeation after the laminated member is repetitively bent.

Further, when an anti-blocking layer is formed by applying a coating composition containing the isocyanate compound directly onto the surface of the gas-barrier layer, it is desired that the coating composition is applied in an amount of 0.01 to 1 g/m², and is fired under the heat-curing conditions of a temperature of 60 to 160°C and, particularly, 70 to 140°C for 0.5 seconds to 5 minutes and, particularly, for 1 second to 3 minutes.

### (Gas-Barrier Material)

The gas-barrier material of the invention has a gas-barrier layer that has a chemical bond stemming from an isocyanate group, and forms an anti-blocking layer containing nitrogen in a particular amount. The gas-barrier material can be preferably produced by applying a composition for forming gas-barrier layer containing a high hydrogen-bonding polymer onto the isocyanate compound-containing layer that has been formed in advance, and vaporizing the solvent in the composition so that the isocyanate compound migrates into the surface of the gas-barrier layer to thereby form the anti-blocking layer on the surface of the gas-barrier layer.
The gas-barrier layer and the anti-blocking layer can be simultaneously formed by heating the composition for forming the gas-barrier layer at a temperature of 60 to 140°C and, particularly, 80 to 140°C for 1 second to 3 minutes and, particularly, for 2 seconds to 2 minutes though dependent upon the kinds of the polycarboxylic acid polymer and the crosslinking agent that are used, the solvent composition and the amount of applying the composition for forming the gas-barrier layer.

According to the invention, the gas-barrier material can be formed by applying a composition for forming the gas-barrier layer onto a film or a sheet which comprises an isocyanate compound-containing layer followed by heating to thereby form a gas-barrier layer and an anti-blocking layer. Preferably, however, an isocyanate compound-containing layer is formed on a plastic base material, and the composition for forming the gas-barrier layer is applied onto the isocyanate compound-containing layer followed by heating to form a gas-barrier layer as well as to form a chemical bond stemming from a particular isocyanate group in the surface of the gas-barrier layer to thereby also obtain the gas-barrier material of a multi-layer structure (hereinafter referred to as "gas-barrier laminated member").

As the plastic base material, there can be exemplified packing materials of any shape such as film, sheet, bottle, cup, tray or can made from a heat-formable thermoplastic resin through such means as extrusion forming, injection forming, blow forming, draw-blow forming or press forming.
Suitable examples of the resin constituting the plastic base material include olefin copolymers such as low-, intermediate- or high-density polyethylene, linear low-density polyethylene, polypropylene, ethylene/propylene copolymer, ethylene/butene copolymer, ionomer, ethylene/vinyl acetate copolymer and ethylene/vinyl alcohol copolymer; polyesters such as polyethylene terephthalate, polybutylene terephthalate, polyethylene terephthalate/isophthalate and polyethylene naphthalate; polyamides such as nylon 6, nylon 6, 6, nylon 6,10 and metaxyleneadipamide; styrene copolymers such as polystyrene, styrene/butadiene block copolymer, styrene/acrylonitrile copolymer and styrene/butadiene/acrylonitrile copolymer (ABS resin); vinyl chloride copolymers such as polyvinyl chloride and vinyl chloride/vinyl acetate copolymer; acrylic copolymers such as polymethyl methacrylate and methyl methacrylate/ethyl acrylate copolymer; and polycarbonates.

These thermoplastic resins may be used in a single kind or in a form of a blend of two or more kinds. Further, the plastic base material may have a single-layer constitution or a laminated constitution of two or more layers obtained, for example, through a simultaneous melt-extrusion or any other lamination method.
As required, further, the above melt-formable thermoplastic resin may be blended with one, two or more of additives such as pigment, antioxidant, antistatic agent, ultraviolet-ray absorber and lubricant in a total amount in a range of 0.001 parts to 5.0 parts per 100 parts by weight of the resin.
In order to reinforce the container, further, the thermoplastic resin may be blended with a fibrous reinforcing material such as glass fiber, aromatic polyamide fiber, carbon fiber, pulp or cotton linter; a powdery reinforcing material such as carbon black or white carbon; or a flake-like reinforcing material such as glass flakes or aluminum flakes, which are used in one kind or in two or more kinds in a total amount of 2 to 150 parts by weight per 100 parts by weight of the thermoplastic resin. In order to increase the weight, further, the thermoplastic resin may be further blended with heavy or soft calcium carbonate, mica, talc, kaolin, gypsum, clay, barium sulfate, alumina powder, silica powder or magnesium carbonate in one kind or in two or more kinds in a total amount of 5 to 100 parts by weight per 100 parts by weight of the thermoplastic resin according to a known recipe.
In order to improve the gas-barrier property, further, the thermoplastic resin may be blended with a scale-like inorganic fine powder, such as water-swelling mica or clay in a total amount of 5 to 100 parts by weight per 100 parts by weight of the thermoplastic resin according to a known recipe.

According to the present invention, the above gas-barrier material may be provided on the surface of the final film, sheet or container, or a preform for forming the container may be coated with the gas-barrier material in advance. As the preform, there can be exemplified a cylindrical parison with or without bottom for biaxial draw-blow forming, a pipe for forming plastic cans, a sheet for vacuum forming, compressed-air forming or plug-assisted forming, a heat-sealable lid and a film for forming bags.
In the gas-barrier material of the invention, it is desired that the gas-barrier layer has a thickness of, usually, 0.1 to 10 µm and, particularly, 0.5 to 5 µm. If the thickness is smaller than the above range, barrier property against oxygen often becomes insufficient. Even if the thickness exceeds the above range, on the other hand, no particular advantage is obtained but rather it becomes disadvantageous from the standpoint of cost.
Further, the gas-barrier layer having the anti-blocking layer on the surface can be provided, as a single layer, on the inner surface or on the outer surface of the packing material, or can be provided as an intermediate layer of a laminate, or can be provided, as a plurality of layers, on the inner and outer surfaces of the packing material, or on at least either the inner surface or the outer surface of the packing material and as an intermediate layer of the laminated member.

### (Metal Ionic Crosslinking)

In the gas-barrier material of the present invention, there remain in the gas-barrier layer the unreacted carboxyl groups that were not used for forming the crosslinked structure. In the present invention, therefore, it is particularly desired to form a metal ionic crosslinking among the carboxyl groups that are remaining unreacted. This decreases the amount of unreacted carboxyl groups, greatly improves the water resistance, helps further introduce the ionic crosslinked structure into the crosslinked structure of the polycarboxylic acid polymer and, therefore, imparts more densely crosslinked structure making it possible to conspicuously improve the gas-barrier property, particularly, under highly humid conditions.
It is desired that the metal ionic crosslinking is such that the carboxyl groups of an amount corresponding to the acid value of not less than 100 mgKOH/g and, more preferably, not less than 330 mgKOH/g in the gas-barrier layer are crosslinked with metal ions.

To form the metal ionic crosslinking among the unreacted carboxyl groups remaining in the gas-barrier layer forming the crosslinked structure, the gas-barrier material is treated with water containing a polyvalent metal compound to thereby easily form the metal ionic crosslinked structure.
Examples of the treatment with water containing the polyvalent metal compound include:
(i) Dipping the gas-barrier material in water containing the polyvalent metal compound;
(ii) Spraying the water containing the polyvalent metal compound onto the gas-barrier material;
(iii) Placing the gas-barrier material in an atmosphere of a high humidity after the treatment (i) or (ii) above; and
(iv) Retort-treatment with water containing the polyvalent metal compound (preferably, a method by which the packing material is brought into direct contact with the hot water).

The above treatment (iii) is the one for bringing about the aging effect after the above treatment (i) or (ii), and helps shorten the time required for the treatment (i) or (ii). Any of the treatments (i) to (iii) may use cold water for the treatment. However, the temperature of water containing the polyvalent metal compound is maintained to be not lower than 20°C and, particularly, 30 to 100°C so that the water containing the polyvalent metal compound easily acts on the gas-barrier material. In the case of (i) or (ii), the treating time is not shorter than 1 second and, particularly, about 2 seconds to 4 days. In the case of (iii), it is desired that the treatment (i) or (ii) is conducted for not shorter than 0.5 seconds and, particularly, for about 1 second to about 1 hour and, thereafter, the gas-barrier material is treated by being placed in an atmosphere of a high humidity for not shorter than 1 hour and, particularly, for 2 hours to about 14 days. In the case of the treatment (iv), the treating temperature is not lower than 101°C and, particularly, 120 to 140°C and the treatment is conducted for not shorter than 1 second and, particularly, for 3 seconds to about 120 minutes.
Further, the gas-barrier material formed from the coating solution in which the polyvalent metal compound has been dissolved or dispersed in advance, may similarly be treated with water or water containing the polyvalent metal compound.

There is no particular limitation on the polyvalent metal ions so far as they are capable of crosslinking the carboxyl groups possessed by the resin, and it is desired that they are divalent or more highly valent and, particularly, divalent to trivalent. Desirably, divalent metal ions are used, such as magnesium ions Mg²⁺ or calcium ions Ca²⁺.
As the metal ions, there can be exemplified alkaline earth metals (magnesium Mg, calcium Ca, strontium Sr, barium Ba, etc.); metals of the Group 8 of periodic table (iron Fe, ruthenium Ru, etc.); metals of the Group 11 of periodic table (copper Cu, etc.); metals of the Group 12 of periodic table (zinc Zn, etc.); and metals of the Group 13 of periodic table (aluminum Al, etc.). Examples of the divalent metal ion include magnesium ion Mg²⁺, calcium ion Ca²⁺, strontium ion Sr²⁺, barium ion Ba²⁺, cupper ion Cu²⁺ and zinc ion Zn²⁺, and examples of the trivalent metal ion include aluminum ion Al³⁺ and iron ion Fe³⁺. The above metal ions can be used in one kind or in a combination of two or more kinds. As the water-dissociating metal compound which is a source of the polyvalent metal ions, there can be exemplified salts of metals constituting the metal ions, such as halides (chlorides, e.g., magnesium chloride, calcium chloride, etc.); hydroxides (e.g., magnesium hydroxide, calcium hydroxide, etc.); oxides (e.g., magnesium oxide, calcium oxide, etc.); carbonates (e.g., magnesium carbonate, calcium carbonate) ; inorganic acid salts such as perhalogenates (perchlorates, e.g., magnesium perchlorate, calcium perchlorate, etc.); sulfates; sulfites (e.g., mangesium sulfonate, calcium sulfonate, etc.); nitrates (e.g., magnesium nitrate, calcium nitrate, etc.); hypophosphites; phosphites; phosphates (e.g., magnesium phosphate, calcium phosphate, etc.); organic acid salts such as carboxylates (acetates, e.g., magnesium acetate, calcium acetate, etc.).
These metal compounds can be used alone or in a combination of two or more kinds. Among these compounds, further, halides and hydroxides of the above metals are preferred.

It is desired that the polyvalent metal compound is present in water in an amount calculated as metal atoms of not less than 0.125 mmol/L, more preferably, not less than 0.5 mmol/L and, further preferably, not less than 2.5 mmol/L.
In the case of any treatment, it is desired that the water containing the polyvalent metal compound is neutral to alkaline.

The gas-barrier material of the invention has excellent anti-blocking property, and is useful as a packing material for retort treatment in a shape of, particularly, a film or a sheet. The gas-barrier material of the invention, further, has a sufficient degree of gas-barrier performance, i.e., an oxygen permeation amount (in compliance with JIS K-7126) of 1 cm³/m² · day · atom (in an environment of 25°C-80%RH) or less before the retort treatment and an oxygen permeation amount of 10 cm³/m² · day · atom (in an environment of 25°C-80%RH) or less after the retort treatment. When a bifunctional alicyclic epoxy compound containing alicyclic epoxy groups is used, in particular, the gas-barrier material of the invention exhibits excellent gas-barrier property, i.e., an oxygen permeation amount of 5 cm³/m² · day · atom (in an environment of 25°C-80%RH) or less after the retort treatment as well as excellent retort resistance.

### EXAMPLES

The invention will be further described by way of the following Examples to which only, however, the invention is in no way limited.

### (Oxygen Permeation Amount)

A laminated member of the obtained plastic films was measured for its oxygn permeation amount by using an apparatus for measuring the oxygen permeation amount (OX-TRAN2/20, manufactured by Modern Control Co.). The oxygen permeation amount was further measured after having executed the retort sterilization treatment at 120°C for 30 minutes. The measuring conditions consisted of an environmental temperature of 25°C and a relative humidity of 80%.

### (Evaluation of Anti-Blocking Property)

The gas-barrier layer was applied onto the isocyanate compound-containing layer formed on a polyethylene terephthalate film, and a predetermined heat-treatment was effected. Immediately thereafter, the gas-barrier layer side was covered with a polyethylene terephthalate film, a weight was placed thereon to exert a load of 10 kg/100 cm², and the laminated member was left to stand in an atmosphere of a temperature of 20°C and a relative humidity of 70% for 1 week. Thereafter, the covered polyethylene terephthalate film was peeled off. In this case, the anti-blocking property was evaluated to be X if sound was produced due to the blocking irrespective of the degree of the sound, and was evaluated to be O if the polyethylene terephthalate film could be peeled off without producing sound. When the isocyanate compound-containing layer was applied onto the gas-barrier layer, too, the anti-blocking property was evaluated by the same method.

### (Example 1)

A polyester polyol (Byron 200, manufactured by Toyo Boseki Co.) was dissolved in an ethyl acetate/MEK mixed solvent (weight ratio of 65/35) to obtain a solution thereof of a concentration of 14% by weight. To the solution were added a polyisocyanate (Sumijule N3300, manufactured by Sumika-Bayer Urethane Co., isocyanulate of 1,6-hexamethylene diisocyanate base) and a di-n-butyltin dilaurate (manufactured by Wako Junyaku Co.) in amounts of 60% by weight and 0.5% by weight with respect to the polyester polyol, and the mixture was diluted with the above, mixed solvent in such a manner that the whole solid component became 14% by weight to thereby obtain a coating solution for forming an anchor layer.
By using a bar coater, the above coating solution was applied onto a biaxially drawn polyethylene terephthalate film 2 of a thickness of 12 µm, heat-treated in a box-type electric oven under the conditions of a preset temperature of 70°C for 2 minutes to obtain the polyethylene terephthalate film having the anchor layer, i.e., having the isocyanate compound-containing layer 3 of a thickness of 0.3 µm. Polyacrylic acid (AC-10LHP, manufactured by Nihon Junyaku Co.) was used as the polycarboxylic acid polymer (A) and was dissolved in a methanol/2-propanol/MEK mixed solvent (weight ratio of 25/25/50) in a manner that the solid component was 8% by weight to obtain a solution (I).
3,4-epoxycyclohexylmethyl-(3,4-epoxy)cyclohexane carboxylate (Cylacure UVR-6110, manufactured by Dow Chemical Co.) was used as the alicyclic epoxy compound (B) and was dissolved in the above mixed solvent in a manner that the amount thereof was 8% by weight to obtain a solution (II).
The solution (II) was added to the solution (I) in a manner that the amount of the 3,4-epoxycyclohexylmethyl(3,4-epoxy) cyclohexane carboxylate was 0.5% by weight with respect to the polyacrylic acid to thereby obtain a coating solution for forming barrier layer.
By using the bar coater, the above coating solution was applied onto the anchor layer of the polyethylene terephthalate film having the anchor layer, i.e., having the isocyanate compound-containing layer 3. The film after applied was heat-treated in a conveyer-type electric oven under the conditions of a preset temperature of 140°C and a pass time of 20 seconds to prepare two pieces of polyethylene terephthalate films having a barrier layer 4 of a thickness of 2 µm on the anchor layer.
The one film was used for evaluating the anti-blocking property and the other film was subjected to a dip-treatment and lamination successively as will be described later to obtain a laminate thereof for evaluating the barrier property.
Calcium chloride was added in an amount of 360 mmols (40 g) calculated as a metal to 1 L of tap water and calcium hydroxide was added in an amount of 11 g to 1 L of tap water to adjust the pH to 12.0 (at a water temperature of 24°C). Thereafter, the water was heated at 40°C, stirred well, and the above film was dipped therein for 3 seconds.
After taken out from the hot water and dried, the coating layer was faced to be the lower layer, and on which were successively laminated a 2 µm-thick urethane adhesive 5, a 15 µm-thick biaxially drawn nylon film 6, a 2 µm-thick urethane adhesive 7 and a 70 µm-thick undrawn polypropylene film 8 to obtain a laminated member 1 of a layer constitution as shown in Fig. 3.

### (Example 2)

A laminated member was obtained by the same method as that of Example 1 but changing the amount of the polyisocyanate added to the coating solution for forming anchor layer into 30% by weight with respect to the polyester polyol.

### (Example 3)

A laminated member was obtained by the same method as that of Example 1 but changing the conditions for heat-treating the anchor layer in the box-type electric oven into a preset temperature of 120°C and a treating time of 2 minutes.

### (Example 4)

A laminated member was obtained by the same method as that of Example 1 but changing the solvent of the coating solution for forming the barrier layer into a methanol/2-propanol/MEK mixed solvent (weight ratio of 20/36/44), adding 2,2'-bis(2-oxazoline)(manufactured by Tokyo Kasei Co.) instead of adding the 3,4-epoxycyclohexylmethyl-(3,4-epoxy) cyclohexane carboxylate, in an amount of 5% by weight with respect to the polyacrylic acid, and adding methyl orthoformate (manufactured by Wako Junyaku Co.) as a dehydrating agent in an amount of 30% by weight with respect to the polyacrylic acid.

### (Example 5)

A laminated member was obtained by the same method as that of Example 1 but changing the solvent of the coating solution for forming the barrier layer into a methanol/MEK mixed solvent (weight ratio of 50/50), adding ethylene glycol(manufactured by Wako Junyaku Co.) instead of adding the 3,4-epoxycyclohexylmethyl-(3,4-epoxy)cyclohexane carboxylate, in an amount of 4% by weight with respect to the polyacrylic acid, and conducting the heat treatment after the application in a box-type electric oven under the conditions of a preset temperature of 180°C for 20 minutes.

### (Example 6)

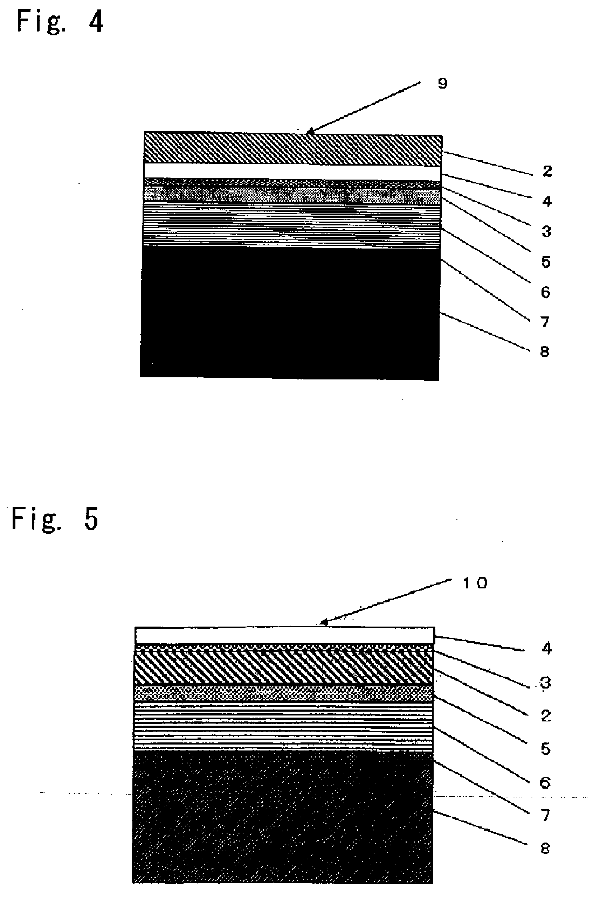

The coating solution for forming the barrier layer of Example 1 was directly applied onto a biaxially drawn polyethylene terephthalate film 2 of a thickness of 12 µm, and was heat-treated in the box-type electric oven under the conditions of a preset temperature of 100°C and a treating time of 2 minutes to obtain a polyethylene terephthalate film having a barrier layer 4 of a thickness of 2 µm.
The polyester polyol (Byron 200, manufactured by Toyo Boseki Co.) was dissolved in an ethyl acetate/MEK mixed solvent (weight ratio of 65/35) to obtain a solution thereof of a concentration of 14% by weight. To the solution were added polyisocyanate (Sumijule N3300, manufactured by Sumika-Bayer Urethane Co.) and the di-n-butyltin dilaurate (manufactured by Wako Junyaku Co.) in amounts of 30% by weight and 0.5% by weight with respect to the polyester polyol, and the mixture was diluted with the above mixed solvent in such a manner that the whole solid component became 14% by weight to thereby obtain a coating solution for forming a top coating.
By using the bar coater, the above coating solution was applied onto a barrier layer of the polyethylene terephthalate film which has the barrier layer 4. The film after applied was heat-treated in a box-type electric oven under the conditions of a preset temperature of 140°C and a treating time of 2 minutes to prepare two pieces of polyethylene terephthalate films having a top coating, i.e., having an isocyanate compound-containing layer 3 of a thickness of 0.3 µm on the barrier layer 4. The one film was used for evaluating the anti-blocking property and the other film was subjected to a dip-treatment and lamination successively in the same manner as in Example 1 but changing the dip-treating time to 10 seconds to obtain a laminated member 9 of a layer constitution as shown in Fig. 4 for evaluating the barrier property.

### (Example 7)

A laminated member was obtained by the same method as that of Example 1 but adding the 3,4-epoxycyclohexylmethyl (3,4-epoxy)cyclohexane carboxylate in an amount of 20% by weight with respect to the polyacrylic acid, and without dipping the polyethylene terephthalate film after the anchor layer and the barrier layer have been applied thereon.

### (Example 8)

A laminated member 10 of a layer constitution shown in Fig. 5 was obtained by the same method as that of Example 1 but successively laminating a 2 µm-thick urethane adhesive layer 5, a 15 µm-thick biaxially drawn nylon film 6, a 2 µm-thick urethane adhesive 7 and a 70 µm-thick undrawn polypropylene film 8 on the barrier layer 4 as the surface layer.

### (Example 9)

A laminated member was obtained by the same method as that of Example 1 but without adding the 3,4-epoxycyclohexylmethyl (3, 4-epoxy) cyclohexane carboxylate to the coating solution for forming the barrier layer.

### (Comparative Example 1)

A laminated member was obtained by the same method as that of Example 1 but changing the amount of the polyisocyanate added to the coating solution for forming the anchor layer to 25% by weight with respect to the polyester polyol, and changing the amount of the 3,4-epoxycyclohexylmethyl(3,4-epoxy) cyclohexane carboxylate added to the coating solution for forming the barrier layer to 1% by weight with respect to the polyacrylic acid.

### (Comparative Example 2)

A laminated member was obtained by the same method as that of Example 1 but heat-treating the anchor layer in the box-type electric oven under the conditions of a preset temperature of 140°C and a treating time of 10 minutes, and changing the amount of the 3,4-epoxycyclohexylmethyl(3,4-epoxy)cyclohexane carboxylate added to the coating solution for forming the barrier layer to 1% by weight with respect to the polyacrylic acid.

### (Comparative Example 3)

A laminated member was obtained by the same method as that of Example 1 but changing the solvent of the coating solution for forming the barrier layer to a solvent of methanol alone .
Table 1 shows the contents of Examples and Comparative Examles.

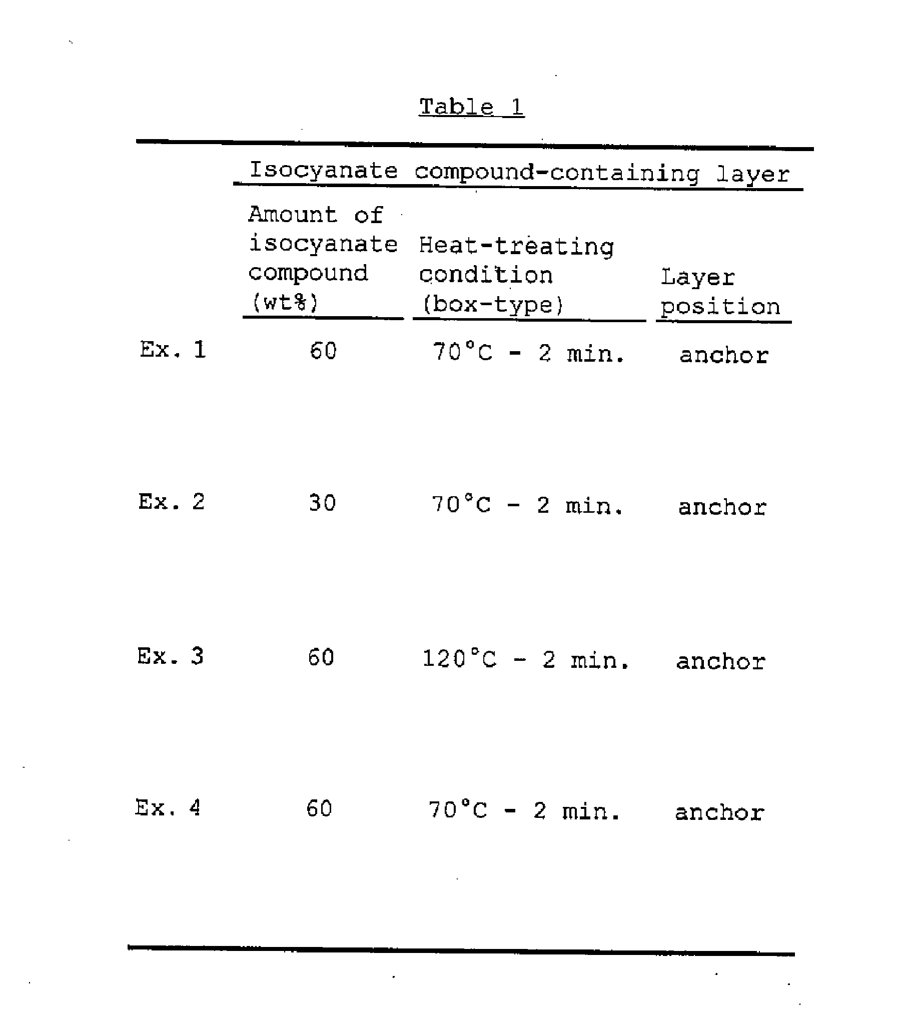

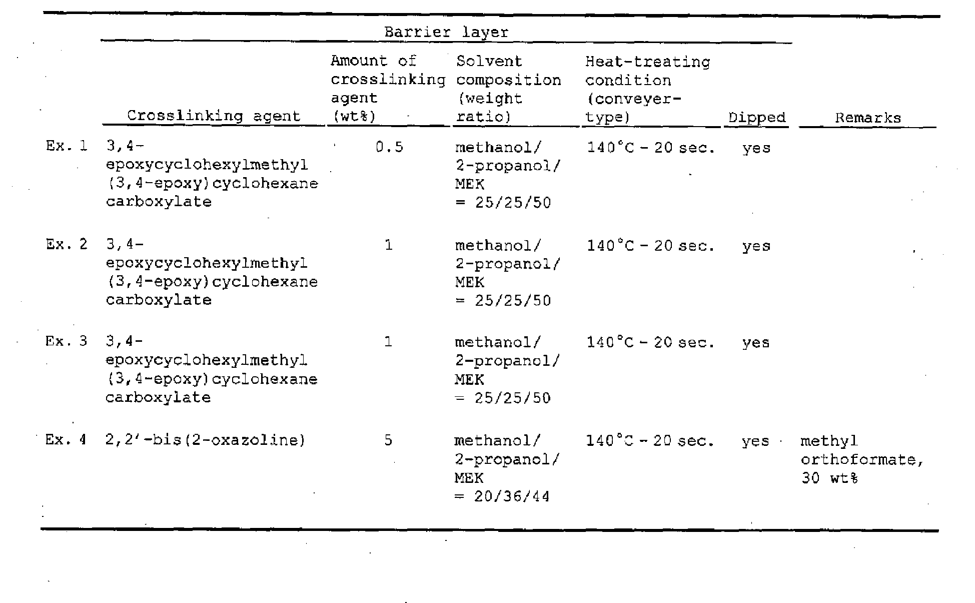

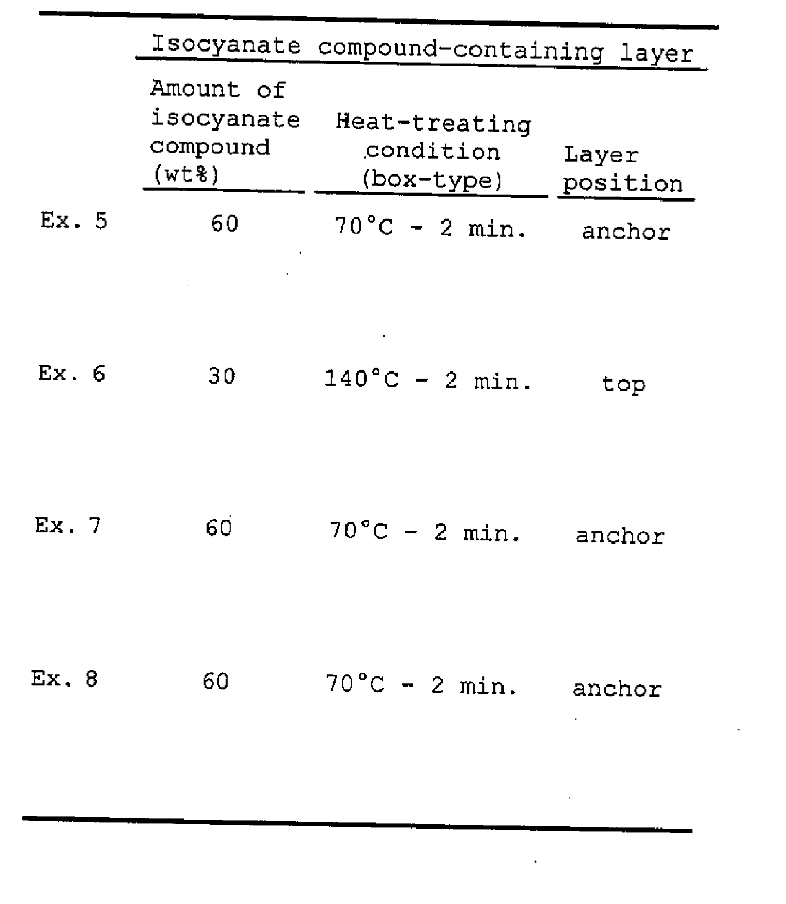

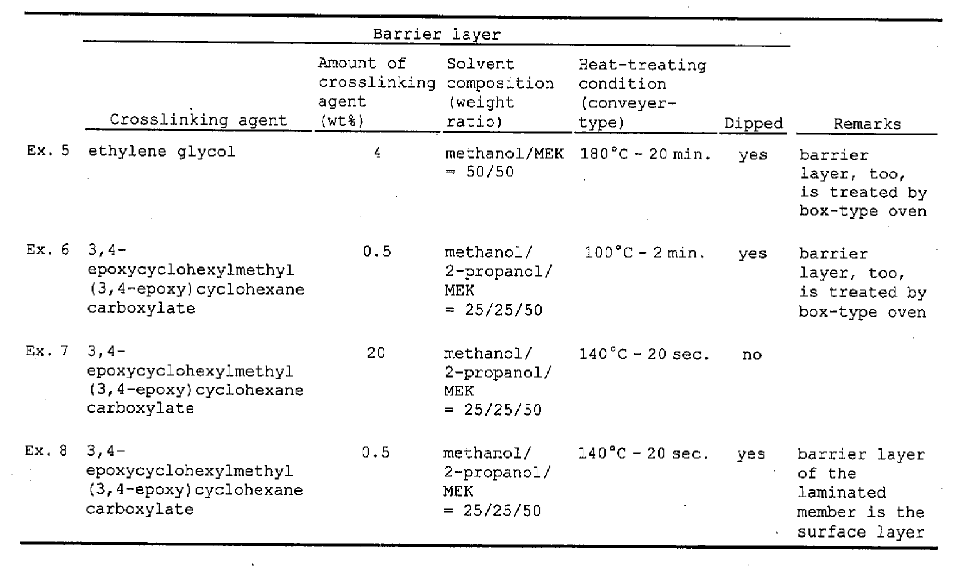

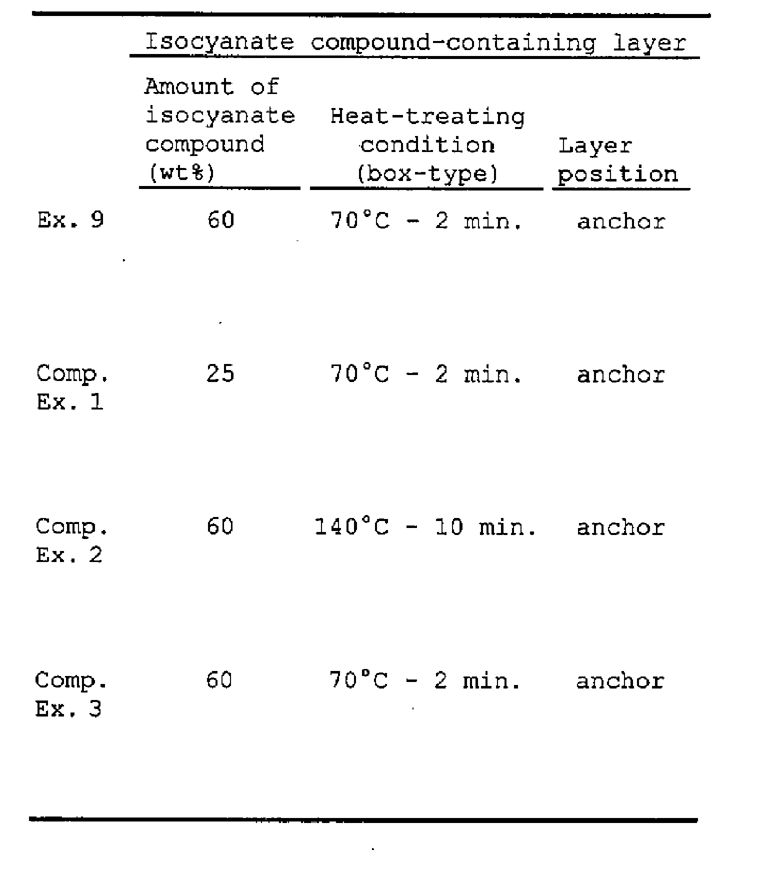

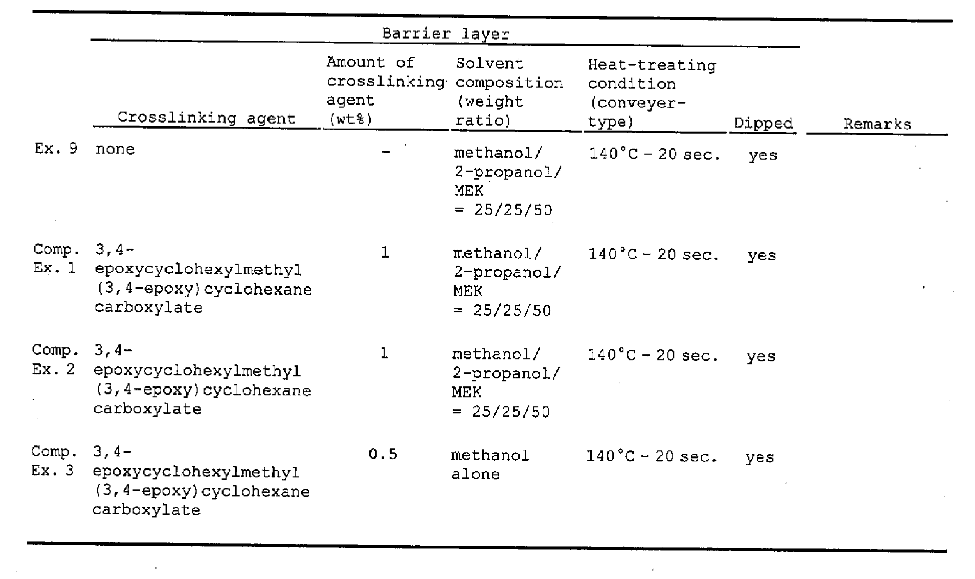

Table 2 shows the evaluated results of anti-blocking properties of polyethylene terephthalate films having the isocyanate compound-containing layer and the barrier layer obtained in Examples and Comparative Examples, as well as each amount of atomic carbon, oxygen and nitrogen in the surfaces of the polyethylene terephthalate films found from the surface analysis by the XPS and the measured results of oxygen permeation amounts through the laminated members before and after the retort treatment.
All of them exhibited good barrier property but good anti-blocking property was exhibited by Examples only. In Examples 1 to 8, if the polyethylene terephthalate films were allowed to have the barrier layer only but without the isocyanate compound-containing layer, then the anti-blocking properties were evaluated to be X.

**Table 2**

| | each Amount of atom by XPS (atom%) | | | Evaluation of anti-blocking property | Oxygen permeation amount (cm³/m²·day·atom)* | |
|---|---|---|---|---|---|---|
| | | | | | Before retort treatment | After retort treatment |
| | carbon | nitrogen | oxygen | | | |
| Ex. 1 | 67.1 | 8.0 | 24.9 | ○ | 0.02 | 0.12 |
| Ex. 2 | 64.1 | 1.2 | 34.7 | ○ | 0.03 | 0.15 |
| Ex. 3 | 66.5 | 4.5 | 29.0 | ○ | 0.08 | 0.53 |
| Ex. 4 | 68.1 | 7.3 | 24.6 | ○ | 0.10 | 0.44 |
| Ex. 5 | 65.4 | 6.3 | 28.3 | ○ | 0.26 | 0.48 |
| Ex. 6 | 89.2 | 1.7 | 9.1 | ○ | 0.02 | 0.41 |
| Ex. 7 | 65.4 | 1.1 | 33.5 | ○ | 0.91 | 4.7 |
| Ex. 8 | 67.2 | 7.9 | 24.9 | ○ | 0.03 | 0.14 |
| Ex. 9 | 66.5 | 9.1 | 24.4 | ○ | 0.03 | 0.18 |
| Comp. Ex. 1 | 64.1 | 0.8 | 35.1 | × | 0.06 | 0.19 |
| Comp. Ex. 2 | 62.6 | 0.6 | 36.8 | × | 0.21 | 0.78 |
| Comp. Ex. 3 | 62.3 | 0.5 | 37.2 | × | 0.12 | 1.2 |
| (Ref.) | | | | | | |
| Laminated member without barrier layer | - | - | - | - | 70 | 130 |

| | | | | | | |
|---|---|---|---|---|---|---|
| * Oxygen permeation amounts were acceptable if smaller than 1 cm³/m²·day·atom before the retort treatment and if smaller than 10 cm³/m²·day·atom after the retort treatment. | | | | | | |

## Claims

1. A gas-barrier material having a gas-barrier layer which comprises a polycarboxylic acid polymer, the gas-barrier layer having a chemical bond stemming from an isocyanate group formed in the surface thereof, and the content of nitrogen being at least not less than 1 atom% per the total amount of carbon, oxygen and nitrogen in the surface layer.

2. The gas-barrier material according to claim 1, wherein said gas-barrier layer is formed on an isocyanate compound-containing layer.

3. The gas-barrier material according to claim 1, wherein said gas-barrier layer is forming a crosslinked structure among the polycarboxylic acid polymers.

4. The gas-barrier material according to claim 3, wherein at least two ester bonds or amide ester bonds are formed in the crosslinked portion in said crosslinked structure.

5. The gas-barrier material according to claim 4, wherein at least one of said ester bonds is adjacent to a cycloalkyl group.

6. The gas-barrier material according to claim 1, wherein said polycarboxylic acid polymer is poly (meth) acrylic acid or partly neutralized product thereof.

7. The gas-barrier material according to claim 1, wherein said gas-barrier layer is forming a metal ionic crosslinking with polyvalent metal ions among the remaining unreacted carboxyl groups.

8. A gas-barrier laminated member having the gas-barrier material of claim 1 formed on the surface of a plastic base material or held between the plastic layers.

9. A method of producing a gas-barrier laminated member by forming an isocyanate compound-containing layer on a plastic base material, applying, onto said isocyanate compound-containing layer, a coating material for forming a gas-barrier layer that contains a polycarboxylic acid polymer, and evaporating the solvent in said coating material so that said isocyanate compound migrates into the surface of the gas-barrier layer to thereby form a chemical bond stemming from an isocyanate group in the surface of the gas-barrier layer.

10. A production method according to claim 9, wherein the chemical bond stemming from the isocyanate group is formed in the surface of said gas-barrier layer followed by the treatment with water containing a polyvalent metal compound to form a metal ionic crosslinking in the gas-barrier layer.
